# EUROPEAN PATENT APPLICATION

(11) **EP 4 527 259 A1**
(43) Date of publication of application: **26.03.2025**
(21) Application number: 23869938.3
(22) Date of filing: 21.07.2023
(51) Int. Cl.: A47J 19/02

(54) **SCREW AND JUICER**

(30) Priority: 28.09.2022 CN 202222575503 U
(71) Applicant: Xu, Shi, Zhongshan, Guangdong 528400 (CN); Jiang, Jine, Zhongshan, Guangdong 528400 (CN)
(72) Inventor: Xu, Shi, Zhongshan, Guangdong 528400 (CN); Jiang, Jine, Zhongshan, Guangdong 528400 (CN)
(74) Representative: Chung, Hoi Kan
(86) International application number: PCT/CN2023/108512
(87) International publication number: WO 2024/066691

(57) **Abstract**

A screw (1200, 2200) and a juicer (1000, 2000). The screw (1200, 2200) is provided with at least two squeezing parts from bottom to top along an axis of the screw (1200, 2200), and a first step (1220, 2220) having an upward surface is arranged between any two squeezing parts. The juicer (1000, 2000) includes a squeezing cavity (1110, 2110) and the screw (1200, 2200). The squeezing parts are located in the squeezing cavity (1110, 2110), a second step (1111, 2111) having a downward surface is arranged in the squeezing cavity (1110, 2110), and the second step (1111, 2111) abuts against the first step (1220, 2220). The screw (1200, 2200) and the juicer (1000, 2000) can effectively utilize the plurality of squeezing parts to perform multiple squeezing on materials, and in addition, the second step (1111, 2111) and the first step (1220, 2220) cooperate to prevent the shaking of the screw (1200, 2200) from affecting the juicing efficiency.

## Description

### TECHNICAL FIELD

The present invention relates to the technical field of juicing devices, and in particular, to a screw and a juicer.

### BACKGROUND

Juicers can process vegetables, fruits, and other ingredients into delicious beverages, and have always been loved by people. With the improvement of people's living standards, the juicer has moved from beverage shops to kitchens in countless households, becoming an essential tool for improving people's lifestyle.

### SUMMARY

### Technical Problem

According to the working principle of the juicer, materials such as fruits and vegetables are put into the juicer through a feeding port, and then juice of materials such as fruits and vegetables is squeezed through pushing and extruding of the screw. However, the problems that a traditional juicer is low in juicing efficiency and the like are always considered by research and development personnel in the industry.

### Technical Solution

A purpose of the present invention is to provide a screw to solve the technical problem of low juicing efficiency. To implement the above purpose, the present invention adopts the following technical solutions: a screw is provided, where at least two squeezing parts are arranged from bottom to top along an axis of the screw, and a first step having an upward surface is arranged between any two squeezing parts.

A second purpose of the present invention is to provide a juicer to solve the technical problem of insufficient juicing. To implement the above purpose, the present invention adopts the following technical solutions: a juicer is provided, including a squeezing cavity and a screw, where the screw is any one of the foregoing screw, the squeezing parts are located in the squeezing cavity, a second step having a downward surface is arranged in the squeezing cavity, and the second step abuts against the first step.

### Beneficial Effects

According to the screw disclosed by the present invention, two squeezing parts are arranged, so that materials can be further squeezed. Meanwhile, first step having an upward surface is arranged, the first step can abut against the screw from above, so that the screw is prevented from moving upwards, and in addition, the screw can be stabilized, so that the screw is prevented from shaking. In particular, when a plurality of squeezing parts are arranged, different positions of the screw are stressed unevenly, and the screw is easier to shake, causing a problem of low juicing efficiency.

Preferably, two squeezing parts are arranged, a first squeezing part and a second squeezing part are sequentially arranged from bottom to top, and the first step is arranged between the first squeezing part and the second squeezing part. The first squeezing part and the second squeezing part can press the materials twice, and the juice yield of two squeezing is much larger than the juice yield of the same squeezing stroke at a time. Because in the two squeezing, the materials squeezed for the second time are basically residues of the first squeezing, however, in one long-stroke squeezing, residues and juice mixtures are squeezed, which easily results in low juice yield.

Preferably, three squeezing parts are arranged, a first squeezing part, a second squeezing part, and a third squeezing part are sequentially arranged from bottom to top, and the first step is arranged between the second squeezing part and the third squeezing part. Three squeezing parts are arranged, so that the number of squeezing times is further increased, and the juice yield of squeezing can be better improved. In addition, the first step is arranged between the third squeezing part and the second squeezing part, and is closer to a tail end of the screw, which is beneficial to stabilizing the screw.

Preferably, the squeezing part is provided with squeezing ribs, and a density of the squeezing ribs on the squeezing part located below is greater than or equal to a density of the squeezing ribs on the squeezing part located above. The squeezing ribs on the squeezing part located below need to further squeeze residues, so that the larger the density of the squeezing ribs is, the more conducive to squeezing juice from the residues.

Preferably, a first residue leakage hole is arranged on the first step. The first residue leakage hole is arranged, so that the residues can be effectively and smoothly guided to a squeezing cavity located below, then the residues are further squeezed, and the squeezing efficiency is improved.

Preferably, a residue cutter is arranged on the first step. The residue cutter is arranged, so that the residues at this position can be cut, the residues are prevented from being accumulated at the first step to affect the juicing efficiency.

Preferably, the surface hardness of the residue cutter is greater than the surface hardness of other areas of the screw. The high-hardness residue cutter is beneficial to improving the shearing force and is more beneficial to improving the residue cutting efficiency. In addition, the high-hardness residue cutter can also prevent the problem that the surface is easy to wear, affecting the service life of the screw and causing problems of difficulty in cleaning and residue remaining.

Preferably, no fixed shaft is arranged at the top end of the screw. The first step is arranged, so that the rotation stability of the screw can be ensured, and the squeezing efficiency is ensured; and no fixed shaft is arranged at the top end, so that assembly and use are simple, and the screw can be well used without accurate alignment mounting.

According to the juicer of the present invention, the screw is used and is matched with the second step, so that the screw can be well stabilized when the screw rotates, so as to prevent the problem of low juicing efficiency caused by upward movement or shaking of the screw when the screw rotates to squeeze juice.

Preferably, a second residue leakage hole is arranged on the second step. The second residue leakage hole is arranged on the second step, so that the residues can be well guided into the squeezing cavity located below for further squeezing without being influenced by the rotation of the screw.

Preferably, a filter screen is arranged in the squeezing cavity, and a pore of the filter screen corresponding to the squeezing part located below is smaller than or equal to a pore of the filter screen corresponding to the squeezing part located above. The filter screen below corresponds to further squeezing of the residues, so that a finer filter screen facilitates squeezing of juice from the residues, and meanwhile, fine residues can be prevented from leaking out of the filter screen, so that the problem that the juicing quality is affected due to the fact that fine residues are contained in the juice is solved.

### BRIEF DESCRIPTION OF THE DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may derive other drawings from these accompanying drawings without creative efforts.

Where:
FIG. 1 is a schematic structural diagram of a screw 1200 according to Embodiment 1;
FIG. 2 is a schematic diagram of a sectional structure of a juicer 1000 according to Embodiment 1;
FIG. 3 is a schematic structural diagram of a screw 2200 according to Embodiment 2; and
FIG. 4 is a schematic diagram of a sectional structure of a juicer 2000 according to Embodiment 2.

### Reference numerals in the drawings:

1000, 2000 - juicer;
1100, 2100 - juicing cup;
1110, 2110 - squeezing cavity;
1111, 2111 - second step;
1112, 2112 - filter screen;
2113 - second residue leakage hole;
1200, 2200 - screw;
1211, 2211 - first squeezing part;
1212, 2212 - second squeezing part;
1220, 2220 - first step;
1221 - first residue leakage hole;
1230, 2230 - squeezing rib;
1240 - residue cutter;
1300, 2300 - base;
1310, 2310 - power unit.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are only some rather than all of the embodiments of the present invention. All other embodiments obtained by a person of ordinary skill in the art based on the embodiments of the present invention without creative efforts shall fall within the protection scope of the present invention.

It should be noted that, when an element is described to be "fixed to" or "disposed on" another element, it may be directly positioned on another element or indirectly positioned on another element. When an element is described to be "connected to" another element, it may be directly connected to another element or indirectly connected to another element.

It should be noted that, the orientations or positional relationships indicated by the terms "length", "width", "up", "down", "front", "back", "left", "right", "vertical", "horizontal", "top", "bottom", "inside", "outside", etc. are based on those shown in the accompanying drawings, intended only for the convenience of describing the present invention and for simplifying the description, and not intended to indicate or imply that the referred apparatus or element must be provided with a particular orientation or constructed and operated with a particular orientation, therefore not allowed to be construed as a limitation of the present invention.

In addition, the terms "first" and "second" are merely intended for a purpose of description, and shall not be understood as an indication or implication of relative importance or an implicit indication of the number of the indicated technical features. Therefore, features defined by "first" and "second" may explicitly or implicitly include one or more of these features. In the description of the present invention, "a plurality of" means two or more, unless otherwise specifically defined.

### Embodiment 1:

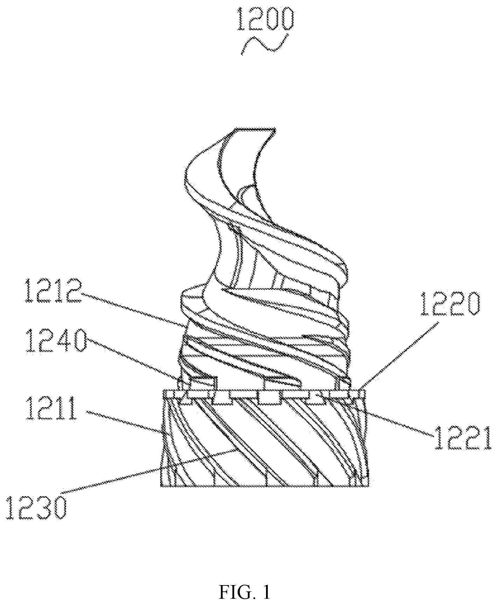

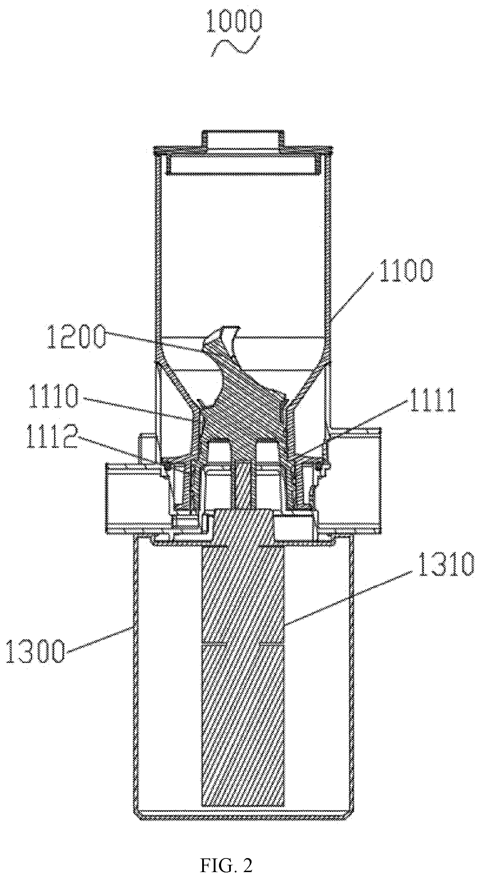

As shown in FIG. 1 and FIG. 2, FIG. 1 is a schematic structural diagram of a screw 1200 according to Embodiment 1 of the present invention, and FIG. 2 is a schematic diagram of a sectional structure of a juicer 1000 according to Embodiment 1 of the present invention.

This embodiment discloses a screw 1200, including a first squeezing part 1211 and a second squeezing part 1212 from bottom to top, and a first step 1220 having an upward surface is arranged between the first squeezing part 1211 and the second squeezing part 1212. The first squeezing part 1211 and the second squeezing part 1212 are each provided with squeezing ribs 1230, and a density of the squeezing ribs 1230 on the first squeezing part 1211 is greater than a density of the squeezing ribs 1230 on the second squeezing part 1212. The first step 1220 is provided with a first residue leakage hole 1221, and the first residue leakage hole 1221 is used for guiding materials or residues on an upper portion of the first step 1220 into a lower portion of the first step 1220. A residue cutter 1240 is arranged above the first step 1220, and the residue cutter 1240 is used for cutting residues, so that the residues can flow downwards from the first residue leakage hole 1221 more easily, and the residues are prevented from being accumulated above the first step 1220. The surface hardness of the residue cutter 1240 is greater than the surface hardness of other areas of the screw 1200. No fixed shaft is arranged at the top end of the screw 1200, and the screw can be in direct contact with the materials.

This embodiment further discloses a juicer 1000, including a juicing cup 1100 and a base 1300, and the juicing cup 1100 is fixed to the base 1300. A squeezing cavity 1110 is arranged in the juicing cup 1100, and a screw 1200 is mounted in the juicing cup 1100. The squeezing part 1210 is arranged in the squeezing cavity 1110. A power unit 1310 is arranged in the base 1300, and the power unit 1310 is connected to the screw 1200 through the bottom of the screw 1200 to provide power for the screw. A second step 1111 having a downward surface is arranged in the squeezing cavity 1110, and the second step 1111 abuts against the first step 1220 to press the screw 1200 from above. A filter screen 1112 is arranged in the squeezing cavity 1110, and a pore of the filter screen 1112 below the first step 1220 is smaller than a pore of the filter screen 1112 above the first step 1220.

According to the screw 1200 of this embodiment, the first step 1220 is arranged, so that the screw 1200 is enabled to rotate without shaking to affect the juicing efficiency. Meanwhile, the first step 1220 can also prevent the screw 1200 from moving upwards. In addition, the density of the squeezing ribs 1230 is arranged, so that materials and residues of the first squeezing part 1211 can be further squeezed. The first residue leakage hole 1221 is arranged, so that materials and residues can be well guided to a lower portion of the first step 1220, and the juicing efficiency is improved. The residue cutter 1240 is arranged, so that the residues are prevented from being accumulated at the first step 1220 to affect the juicing efficiency. The high surface hardness of the residue cutter 1240 can ensure the service life and easy cleaning of the residue cutter 1240.

According to the juicer 1000 of this embodiment, the second step 1111 is arranged and is matched with the first step 1220, so that the rotation of the screw 1200 can be well stabilized, and the juicing efficiency and the juicing effect are prevented from being affected due to shaking. Through the arrangement of the pores of the filter screen 1112, the residues of the first squeezing part 1211 can be better squeezed out of juice, so as to prevent the fine residues from flowing out along with the juice.

### Embodiment 2:

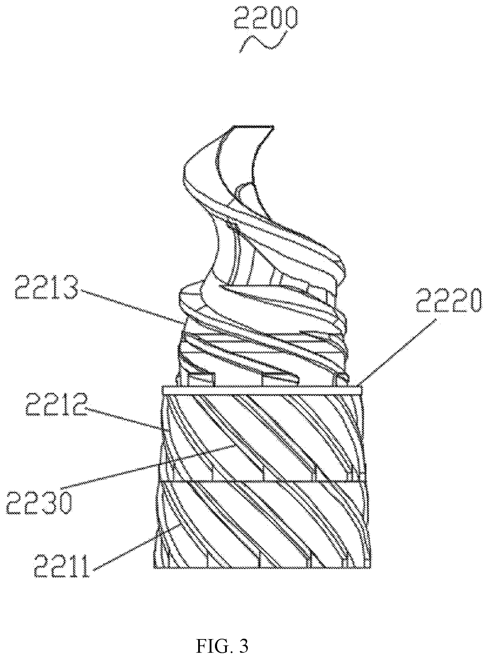

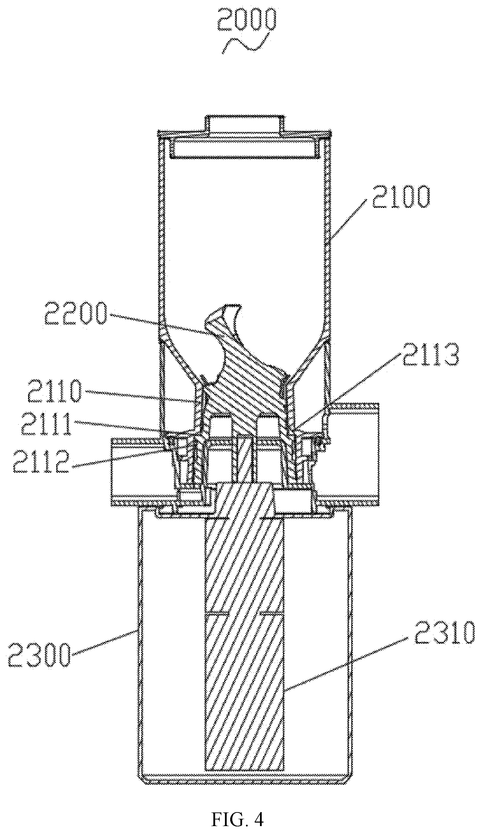

As shown in FIG. 3 and FIG. 4, FIG. 3 is a schematic structural diagram of a screw 2200 according to Embodiment 2 of the present invention, and FIG. 4 is a schematic diagram of a sectional structure of a juicer 2000 according to Embodiment 2 of the present invention.

This embodiment discloses a screw 2200, including a first squeezing part 2211, a second squeezing part 2212, and a third squeezing part 2213 from bottom to top. A first step 2220 having an upward surface is arranged between the second squeezing part 2212 and the third squeezing part 2213. The first squeezing part 2211, the second squeezing part 2212, and the third squeezing part 2213 are each provided with squeezing ribs 2230, a density of the squeezing ribs 2230 on the first squeezing part 2211 is basically equal to a density of the squeezing ribs 2230 on the second squeezing part 2212, and the density of the squeezing ribs 2230 on the second squeezing part 2212 is greater than a density of the squeezing ribs 2230 on the third squeezing part 2213. No fixed shaft is arranged at the top end of the screw 2200.

This embodiment further discloses a juicer 2000, including a juicing cup 2100 and a base 2300, and the juicing cup 2100 is fixed to the base 2300. A squeezing cavity 2110 is arranged in the juicing cup 2100, and a screw 2200 is mounted in the juicing cup 2100. The squeezing part 2210 is arranged in the squeezing cavity 2110. A power unit 2310 is arranged in the base 2300, and the power unit 2310 is connected to the screw 2200 through the bottom of the screw 2200 to provide power for the screw. A second step 2111 having a downward surface is arranged in the squeezing cavity 2110, and the second step 2111 abuts against the first step 2220 to press the screw 2200 from above. The second step 2111 is provided with a second residue leakage hole 2113, and the second residue leakage hole 2213 is used for guiding materials or residues on an upper portion of the first step 2220 into a lower portion of the first step 2220. A filter screen 2112 is arranged in the squeezing cavity 2110, a pore of the filter screen 2112 corresponding to the first squeezing part 2211 is basically equal to a pore of the filter screen 2112 corresponding to the second squeezing part 2212, and the pore of the filter screen 2112 corresponding to the second squeezing part 2212 is smaller than a pore of the filter screen 2112 corresponding to the third squeezing part 2213.

The screw 2200 and the juicer 2000 of this embodiment have basically the same effect as the screw 1200 and the juicer 1000 of Embodiment 1. Further, the screw 2200 of this embodiment is provided with three squeezing parts, so that residues can be subjected to triple squeezing, and the squeezing effect is further improved. In addition, the first step 2220 is arranged between the second squeezing part 2212 and the third squeezing part 2213, which is more conducive to stabilizing the screw 2200, so as to prevent the screw 2200 from shaking during rotation, resulting in low juicing efficiency. According to the juicer 2000 of this embodiment, the second residue leakage hole 2213 is arranged on the second step 2111, so that the residues can be well guided to a lower portion of the first step 2220, and the rotation of the screw 2200 is not affected, so as to prevent the juicing efficiency from being affected.

What is disclosed above is merely preferred embodiments of the present invention, and certainly is not intended to limit the protection scope of the present invention. Therefore, any equivalent modifications made in accordance with the claims of the present invention shall fall within the scope of the present invention.

## Claims

1. A screw, wherein at least two squeezing parts are arranged from bottom to top along an axis of the screw, and a first step having an upward surface is arranged between any two squeezing parts.

2. The screw according to claim 1, wherein two squeezing parts are arranged, a first squeezing part and a second squeezing part are sequentially arranged from bottom to top, and the first step is arranged between the first squeezing part and the second squeezing part.

3. The screw according to claim 1, wherein three squeezing parts are arranged, a first squeezing part, a second squeezing part, and a third squeezing part are sequentially arranged from bottom to top, and the first step is arranged between the second squeezing part and the third squeezing part.

4. The screw according to claim 1, wherein the squeezing part is provided with squeezing ribs, and a density of the squeezing ribs on the squeezing part located below is greater than or equal to a density of the squeezing ribs on the squeezing part located above.

5. The screw according to claim 1, wherein a first residue leakage hole is arranged on the first step.

6. The screw according to claim 1, wherein a residue cutter is arranged above the first step.

7. The screw according to claim 6, wherein the surface hardness of the residue cutter is greater than the surface hardness of other areas of the screw.

8. The screw according to claim 1, wherein no fixed shaft is arranged at the top end of the screw.

9. A juicer, comprising a squeezing cavity and a screw, wherein the screw is the screw according to claim 1, the squeezing parts are located in the squeezing cavity, a second step having a downward surface is arranged in the squeezing cavity, and the second step abuts against the first step.

10. The juicer according to claim 9, wherein a second residue leakage hole is arranged on the second step.

11. The juicer according to claim 9, wherein a filter screen is arranged in the squeezing cavity, and a pore of the filter screen corresponding to the squeezing part located below is smaller than or equal to a pore of the filter screen corresponding to the squeezing part located above.
